# EUROPÄISCHE PATENTSCHRIFT

(11) **EP 3 433 213 B1**
(45) Veröffentlichungstag und Bekanntmachung des Hinweises auf die Patenterteilung: **27.11.2019**
(21) Anmeldenummer: 17719792.8
(22) Anmeldetag: 23.03.2017
(51) Int. Cl.: C03B 5/43, C03B 5/167, C03B 5/425, B22F 3/24, B22F 3/16, B22F 5/00, C21D 7/06, C21D 1/26, C22C 1/04, C22C 27/00, C22F 1/18

(54) **GLASSCHMELZ-KOMPONENTE**
GLASS-MELTING COMPONENT
COMPOSANT DE FUSION DE VERRE

(30) Priorität: 25.03.2016 AT 6416 U
(43) Veröffentlichungstag der Anmeldung: 30.01.2019
(73) Patentinhaber: Plansee SE, 6600 Reutte (AT)
(72) Erfinder: TRAXLER, Hannes, 6600 Reutte (AT); MARK, Michael, 6600 Reutte (AT); SCHIFTNER, Robert, 6600 Reutte (AT); KNABL, Wolfram, 6600 Reutte (AT)
(74) Vertreter: Ciesla, Bettina
(86) Internationale Anmeldenummer: PCT/AT2017/000017
(87) Internationale Veröffentlichungsnummer: WO 2017/161391

(56) Entgegenhaltungen:
- WO-A1-2011/066126
- DE-A1- 19 921 934
- DATABASE WPI Week 201563 Thomson Scientific, London, GB; AN 2015-55041Q XP002771372, -& WO 2015/137340 A1 (ALMT CORP) 17. September 2015 (2015-09-17)

## Beschreibung

Die Erfindung betrifft ein Verfahren zur Herstellung einer Glasschmelz-Komponente aus Refraktärmetall mit den Merkmalen des Oberbegriffs von Anspruch 1 sowie eine Glasschmelz-Komponente aus Refraktärmetall.

Trotz einer hohen chemischen Beständigkeit von Refraktärmetallen gegenüber Glasschmelzen erleiden Glasschmelz-Komponenten aus Refraktärmetall dennoch häufig einen korrosiven Angriff durch die Glasschmelze.

Zur Verbesserung der Beständigkeit von mit Schmelzen in Berührung stehenden Oberflächen werden häufig Beschichtungen aufgebracht. In der US20150225870A1 ist beispielsweise ein Molybdän-Tiegel zur Saphir-Einkristall-Züchtung beschrieben, wobei die Innenwandung des Tiegels mit einer Beschichtung aus Wolfram versehen ist.

Beschichtungen bringen allerdings den Nachteil mit sich, dass Elemente bzw. Partikel aus der Beschichtung in die Schmelze treten und diese verunreinigen können.

Ein Verfahren nach dem Oberbegriff von Anspruch 1 zeigt die WO2011066126 (A1). Die WO2011066126 (A1) beschreibt ein Verfahren zur Herstellung kriechbeständiger Bleche für Glasschmelzen, indem ein Teil einer Oberfläche sandgestrahlt wird, so Eigenspannungen induziert werden und danach geglüht wird. Zweck des Verfahrens ist die Ausbildung einer Wölbstruktur, welche die Kriechbeständigkeit verbessern soll.

Die WO2015137340 (A1) beschreibt ein Verfahren zur Herstellung eines Tiegels, bei welchem über Glühverfahren bestimmte Maximalgehalte an C und O und damit verbunden eine geringe Härte eingestellt werden sollen.

Die DE19921934 (A1) beschreibt ein Verfahren zur Herstellung eines Sinterformteils unter Verdichten von zumindest Teilbereichen der Oberfläche des Sinterformteils.

Aufgabe der Erfindung ist, ein Verfahren zur Herstellung einer Glasschmelz-Komponente aus Refraktärmetall mit verbesserter Beständigkeit gegenüber Glasschmelzen anzugeben. Auch soll eine Glasschmelz-Komponente mit verbesserter Beständigkeit gegenüber Schmelzen angegeben werden.

Gelöst wird diese Aufgabe durch ein Verfahren zur Herstellung einer Glasschmelz-Komponente mit den Merkmalen von Anspruch 1 bzw. eine Glasschmelz-Komponente mit den Merkmalen von Anspruch 6. Bevorzugte Ausführungsformen sind in den abhängigen Ansprüchen angegeben.

Indem eine oberflächliche Randzone der Glasschmelz-Komponente zumindest abschnittsweise durch Beaufschlagung mit lokaler Druckspannung verdichtet und dabei gegenüber einem unterhalb der oberflächlichen Randzone liegenden Volumenabschnitt, der eine Restporosität aufweist, in der Porosität reduziert wird, kann der korrosive Angriff durch Glasschmelzen auf die Glasschmelz-Komponente deutlich reduziert werden. Die in ihrer Porosität reduzierte Randzone bietet einer Glasschmelze geringere Angriffsmöglichkeit und ist daher beständiger gegen einen korrosiven Angriff.

Unter Refraktärmetallen werden im Zusammenhang mit dieser Erfindung die Metalle der 4. Gruppe (Titan, Zirconium und Hafnium), der 5. Gruppe (Vanadium, Niob, Tantal) und der 6. Gruppe (Chrom, Molybdän, Wolfram) des Periodensystems sowie Rhenium und Legierungen der genannten Elemente (Refraktärmetalllegierungen) verstanden. Unter Refraktarmetalliegierungen sind Legierungen mit wenigstens 50 at % des betreffenden Elements gemeint

Diese Werkstoffe weisen unter anderem eine ausgezeichnete Formbeständigkeit bei hohen Einsatztemperaturen auf und sind gegenüber vielen Schmelzen chemisch beständig. Molybdän und Molybdänlegierungen weisen etwa eine sehr hohe Beständigkeit gegenüber vielen Glasschmelzen auf. Unter Glasschmelzen werden im Zusammenhang dieser Anmeldung Schmelzen oxidischer Werkstoffe wie zum Beispiel slilikatische Gläser, (etwa Quarzglas), Boratgläser (etwa Borosilikatgläser) sowie Schmelzen von Aluminiumoxid verstanden.

Unter Glasschrnete-Komponenten werden im Zusammenhang dieser Anmeldung Komponenten verstanden, die für einen Einsatz in Kontakt mit Glasschmelzen vorgesehen sind.

Dazu zählen zum Beispiel Glasschmelzelektroden, Wannenverkleidungen in der Glaserzeugung oder Schmelztiegel. Besonders hervorzuheben sind dabei Tiegel zur Herstellung von Quarzglas oder Saphir-Einkristallen.

Neben der verringerten Porosität in der oberflächlichen Randzone führt die Anwendung des erfindungsgemäßen Verfahrens auch zu einer Glättung der Oberfläche der mit Druckspannung beaufschlagten oberflächlichen Randzone. Eine solchermaßen geglättete Oberfläche bietet einer Glasschmelze weniger Angriffsmöglichkeit für einen korrosiven Angriff. Zudem wird eine Blasenbildung in der Glasschmelze reduziert.

Die Erfindung ist insbesondere geeignet für die Anwendung auf pulvermetallurgisch hergestellte Komponenten, die eine Restporosität aufweisen. Unter Restporosität wird ein in der Komponente vorhandener Porenanteil verstanden, der im Rahmen der Herstellung im Volumen verbleibt, wobei dies insbesondere bei pulvermetallurgisch hergestellten Komponenten der Fall ist.

Eine pulvermetallurgische Herstellung umfasst in der Regel ein Pressen einer Pulvermischung und anschließendes Sintern.

Auf das Sintern können ein oder mehrere Umformschritte folgen, Ein Formteil kann beispielsweise aus einem solchermaßen umgeformten Halbzeug gefertigt werden. Ein Beispiel dafür sind etwa Glasschmetzefektroden, die im Wesentlichen durch Ablängen von geschmiedeten und /oder gewalzten Stangen dargestellt werden.

Ein anderes Beispiel zur Herstellung einer Glasschmelz-Komponente über ein Halbzeug ist das Biegen, Fließpressen oder Drucken von gewalztem Blech zu einem Tiegel.

Auch ist es möglich, Formteile direkt über Pressen von Pulver zu einer Geometrie des späteren Formteils und anschließendes Sintern herzustellen. Solcherart hergestellte Formteile werden als p/s - Formteile bezeichnet (von engl. *pressed*/*sintered,* gepresst-gesintert). p/s-Formteile sind in der Reget zur Verwendung in ihrem gesinterten Zustand, gegebenenfalls nach einer mechanischen Bearbeitung zur Einstellung von gewünschten Toleranzen, vorgesehen. Man spricht in diesem Zusammenhang auch von endkontumaher Fertigung, engl. *neer net shape manufacturing.* Eine typische relative Dichte von p/s-Formteilen beträgt 92% bis 97%, entsprechend einer Restporosität von 3 bis 8%, Eine gepresst-gesinterte Komponente ist in der Regel weitgehend frei von plastischer Umformung.

Für viele Anwendungen ist eine Restporosität von 3 bis 8% akzeptabel, zumal der Herstellungsweg über Pressen und Sintern in die Endkontur einer Komponente ein sehr wirtschaftliches Verfahren darstellt Auf diese Weise können beispielsweise Tiegel günstig hergestellt werden.

Durch das erfindungsgemäße Verfahren wird nun eine oberflächliche Randzone der Glasschmalz-Komponente, welche in übrigen Volumenabschnitten eine Restporosität aufweist, so verdichtet, dass die Porosität in der oberflächlichen Randzone reduziert ist

Bevorzugt ist vorgesehen, dass die Beaufschlagung mit lokaler Druckspannung durch einen Wälzkörper in einem Glättwalzprozess erfolgt. Der Wälzkörper wird an eine Oberfläche eines Werkstückes angepresst und in überlappenden Bahnen über die Oberfläche geführt. Beim Glättwalzen wird eine Randzone eines Werkstücks mittels des Wälzkörpers plastisch umgeformt. Der Wälzkörper ist dabei in der Regel klein im Verhältnis zum Werkstück. Es erfolgt keine Massivumformung wie etwa bei einem Walzen. Die Umformung bleibt auf eine oberflächennahe Randzone beschränkt.

Glättwalzen wird normalerweise zum Einstellen geringer Rauheiten sowie zur Verbesserung von Ermüdungseigenschaften von Werkstücken durch Induzierung von Druckeigenspannungen an Werkstückoberflächen eingesetzt.

Das Glättwalzen bewirkt in der vorgeschlagenen Anwendung auf Glasschmelz-Komponenten, die eine Restporosität aufweisen, bevorzugt pulvermetallurgisch hergestellte Glasschmelz-Komponenten, einen Abbau dieser Restporosität in einer oberflächlichen Randzone der in übrigen Volumenabschnitten eine Restporosität aufweisenden Glasschmelz-Komponente, wodurch die Glasschmelz-Komponente weniger angreifbar für Glasschmelzen wird.

Es kann vorgesehen sein, dass die Beaufschlagung mit lokaler Druckspannung durch Kugelstrahlen erfolgt. Auch mit Kugelstrahlen konnte eine Verringerung der Porosität in einer oberflächlichen Randzone beobachtet werden, allerdings nur bis in geringere Tiefe als beim Glättwalzen.

Bevorzugt ist vorgesehen, dass durch die Beaufschlagung mit lokaler Druckspannung die Porosität der verdichteten oberflächlichen Randzone auf kleiner 1 % reduziert wird. Die Porosität der verdichteten oberflächlichen Randzone liegt bevorzugt zwischen 0 % und 1 %, insbesondere zwischen 0,1% und 1 %.

Bevorzugt ist vorgesehen, dass die aufgebrachte lokale Druckspannung über einer Streckgrenze des Refraktärmetalls liegt. Damit wird erreicht, dass das Refraktärmetall in der oberflächlichen Randzone plastisch verformt wird. Erfindungsgemäß ist vorgesehen, dass nach der Verdichtung der Randzone die Glasschmelz-Komponente einer Wärmebehandlung bei einer Temperatur oberhalb einer Rekristallisationstemperatur des Refraktärmetalls unterzogen wird. Ganz entgegen der Lehre im Zusammenhang mit Glättwalzen, worin eine Erhöhung einer Randhärte sowie das Einbringen von Druckeigenspannungen angestrebt wird, geht diese bevorzugte Verfahrensvariante den scheinbar paradoxen Weg, die zuvor an einer Randzone plastisch verformte Glasschmelz-Komponente einer Wärmebehandlung bei einer Temperatur oberhalb der Rekristallisationstemperatur des Refraktärmetalls zu unterziehen. Eine Wärmebehandlung oberhalb der Rekristallisationstemperatur führt in jedem Fall dazu, dass etwaige vorhandene Härtesteigerungen durch Kaltverfestigung sowie etwaige vorhandene Druckeigenspannungen abgebaut werden. Deswegen würde eine Wärmebehandlung oberhalb der Rekristallisationstemperatur an zuvor zum Zwecke einer Härtesteigerung und / oder Einbringung von Druckeigenspannungen behandelten Komponenten in der Regel nicht durchgeführt werden.

In Versuchen der Anmelderin wurde jedoch herausgefunden, dass die Wärmebehandlung oberhalb der Rekristallisationstemperatur zu einem massiven Kornwachstum in der zuvor durch Beaufschlagung mit lokaler Druckspannung verdichteten und damit plastisch verformten oberflächlichen Randzone führt. Dies lässt sich durch eine Erhöhung der Triebkraft für Kornwachstum erklären, welche durch die plastische Verformung der Randzone eingebracht wird. Die bevorzugte Ausbildung eines Grobkorngefüges erfolgt bei geringen Umformgraden, da dann nur wenige Rekristallisationskeime zur Verfügung stehen.

Das erfindungsgemäß erzeugte Grobkorngefüge in der Randschicht verbessert signifikant die Beständigkeit der Glasschmelz-Komponente gegenüber einem korrosiven Angriff durch eine Glasschmelze. Wegen der verminderten Anzahl an Korngrenzen wird eine Eindiffusion der Glasschmelze in die Komponente erschwert.

Über der Rekristallisationstemperatur wandelt sich das Gefüge durch Abbau von Gitterfehlern und Komneubildung um. Bekanntermaßen ist die Rekristallisationstemperatur eine Funktion des Umformgrades, wobei die Rekristallisationstemperatur üblicherweise mit steigendem Umformgrad sinkt. Der Grund dafür ist, dass durch Umformung Energie in den Werkstoff eingebracht wird, welche als Triebkraft für eine Rekristallisation wirkt.

Als Richtwert für die Rekristallisationstemperatur TRₓₓ gilt 0.3 Tₛ < TRₓₓ < 0.5 Tₛ mit Tₛ ist der Schmelzpunkt des Werkstoffes in Kelvin. Die Temperatur der Wärmebehandlung wird vorzugsweise so gelegt, dass die Rekristallisationstemperatur der verdichteten Randzone erreicht wird, im Übrigen, nicht verformten Volumen jedoch keine Rekristallisation stattfindet. Besonders bevorzugt geschieht die Wärmebehandlung oberhalb der Rekristallisationstemperatur des Refraktärmetalls bei einem ersten Einsatz der Glasschmelz-Komponente. So kann auf eine separate Glühung der Glasschmelz-Komponente verzichtet werden, und die das Kornwachstum bewirkende Wärmebehandlung erfolgt in situ. Dies kann für Anwendungen bei Einsatztemperaturen realisiert werden, die über der jeweiligen Rekristaliisationstemperatur des betreffenden Refraktärmetails, bzw. genauer gesagt über der Rekristallisationstemperatur in der verdichteten Randzone liegen. Für Anwendungen in der Saphir-Einkristallzucht und der Quarzglasproduktion ist dies stets der Fall. Hier liegen typische Einsatztemperaturen bei ≥ 2000°C und damit sicher über der Rekristellisationstamperatur der relevanten Werkstoffe.

Auch ist verstellbar, nicht die gesamte Glasschmelz-Komponente der Wärmebehandlung zu unterziehen, sondern nur die Randzone zu erwärmen. So könnte beispielsweise über induktive Erwärmung nur die Randzone erwärmt werden.

Schutz wird auch begehrt für eine Glasschmelz-Komponente aus Refraktärmetall, welche zumindest abschnittsweise eine oberflächliche Randzone aufweist, die gegenüber einem unterhalb der oberflächlichen Randzone liegenden Volumenabschnitt, der eine Restporosität aufweist, verdichtet ist und eine verringerte Porosität aufweist.

Die Glasschmelz-Komponente ist durch ein pulvermetallurgisches Verfahren, vorzugsweise Pressen und Sintern hergestellt.

Bevorzugt ist vorgesehen, dass die Porosität der oberflächlichen Randzone zwischen 0 % und 1 % liegt und die Restporosität im übrigen Volumen zwischen 3 % und 8 % liegt. Insbesondere bevorzugt liegt die Porosität der oberflächlichen Randzone zwischen 0,1% und 1%.

Bevorzugt ist vorgesehen, dass die Porosität der oberflächlichen Randzone um wenigstens 1,5 % - Punkte unter der Porosität eines darunterliegenden Volumenabschnitts liegt. In anderen Worten beträgt die Differenz der Porositäten wenigstens 1,5 % - Punkte. In einem Zahlenbeispiel: beträgt die Porosität in einem darunterliegenden Volumenabschnitt 2,5 %, so liegt die Porosität der oberflächlichen Randzone bei 1% oder darunter. Dies bringt zum Ausdruck, dass ein deutlicher Unterschied in der Porosität der oberflächlichen Randzone zu einem darunterliegenden Volumen vorliegt.

Die oberflächliche Randzone ist bevorzugt in jenem Bereich der Glasschmelz-Komponente ausgebildet, welcher bei einem Einsatz der Glasschmelz-Komponente einer Glasschmelze ausgesetzt ist.

Es ist vorgesehen, dass die porenfreie Randzone eine gröbere Kornstruktur aufweist als darunterliegende Vofumenabschnitte der Glasschmeiz-Komponente. So kann eine mittlere Korngröße in der oberflächlichen Randzone bevorzugt wenigstens 50 % größer als in darunterliegenden Volumenabschnitten sein, besonders bevorzugt wenigstens doppelt so groß sein. Die gröbere Kornstruktur in der oberflächlichen Randzone bewirkt eine höhere Beständigkeit gegen korrosiven Angriff durch Glasschmelzen. Dies ist durch die verringerte Anzahl an Korngrenzen in einem Grobkorngefüge gegenüber einem Feinkorngefüge erklärlich. Eine solchermaßen ausgebildete Glasschmelz-Komponente weist also in darunterliegenden Volumenabschnitten ein feinkörniges Gefüge auf. In der oberflächlichen Randzone hingegen weist die Glasschmelz-Komponente ein Grobkorngefüge auf, welches einen besonders hohen Widerstand gegen korrosiven Angriff durch Glasschmelzen bewirkt.

Es ist vorgesehen, dass eine mittlere Korngröße der oberflächlichen Randzone in einem Bereich von 40 bis 1000 µm, bevorzugt in einem Bereich von 100 bis 300 µm liegt, wahrend in darunterliegenden Volumenabschnitten beispielsweise eine mittlere Korngröße von 15 - 40 µm besteht.

Bevorzugt ist vorgesehen, dass die oberflächliche Randzone eine Tiefe zwischen 50 µm und 1000 µm, bevorzugt zwischen 300 µm und 500 µm aufweist. In anderen Worten reicht die oberflächliche Randzone wenigstens 50 µm und bis zu 1000 µm, bevorzugt zwischen 300 µm und 500 µm in das Volumen der Glasschmelz-Komponente hinein.

Bevorzugt ist vorgesehen, dass die oberflächliche Randzone an ihrer Oberfläche eine Rauheit Ra kleiner 0,30 µm, bevorzugt Ra kleiner 0,20 µm, besonders bevorzugt kleiner 0,15 µm aufweist. Eine unbehandelte Oberfläche einer gepresst-gesinterten Komponente weist im Vergleich dazu eine Rauheit Ra von typischerweise 0,70 µm auf. Eine geringe Rauheit verbessert die Beständigkeit der Oberfläche gegen einen korrosiven Angriff. Zudem wird eine Blasenbildung an der Oberfläche reduziert, da eine glatte Oberfläche wenig Keime zur Entwicklung von Gasblasen anbietet.

Die Glasschmelz-Komponente kann in einem bevorzugten Beispiel ein Tiegel, insbesondere ein Tiegel zur Herstellung von Quarzglas oder Saphir-Einkristallen sein. Die geschilderte Beschaffenheit der erfindungsgemäßen Glasschmelz-Komponente ist für Tiegel besonders vorteilhaft. Die Qualität eines darin erzeugten Quarzglases oder Saphir-Einkristalls wird verbessert sowie die Standzeit des Tiegels verlängert.

In einem weiteren bevorzugten Beispiel kann die Glasschmelz-Komponente eine Glasschmelzelektrode sein. Auch hier kommen die Vorzüge der erfindungsgemäßen Glasschmelz-Komponente besonders zur Geltung. Zu nennen sind insbesondere die verringerte Blasenbildung und die verlängerte Standzeit von solcherart ausgebildeten Glasschmelzetektroden.

Bevorzugt kann vorgesehen sein, dass die Glasschmelz-Komponente sowohl an einer Innenwandung als auch an einer Außenwandung eine verdichtete oberflächliche Randzone aufweist In dieser bevorzugten Ausführungsform ist also sowohl eine Innenwandung als auch eine Außenwandung der Glasschmelz-Komponente, insbesondere eines Tiegels, in einer oberflächlichen Randzone durch Beaufschlagung mit mechanischer Druckspannung verdichtet. Diese Variante bietet sich insbesondere für eine Kavität bildende Glasschmelz-Komponenten, also beispielsweise Tiegel oder Wannen an. Die so erhaltene Glasschmelz-Komponente weist sowohl an ihrer Innenwandung als auch an ihrer Außenwandung eine oberflächliche Randzone auf, welche in der Porosität gegenüber einem unterhalb der oberflächlichen Randzone liegenden Volumenabschnitt reduziert ist.

Der besondere Vorteil dieser Variante ist es, dass damit ein Sandwich-Aufbau mit außen wie innen verdichteten Randzonen geschaffen wird. Nach einer Rekristallisation zeigt eine solche Glasschmelz-Komponente ein Gefüge mit Grobkorngefüge an den innen und außen liegenden Randzonen. Dazwischen hingegen verbleiben Bereiche mit kleineren Körnern.

Bei nur einseitig verdichteter Randzone können durch Rekristallisation Körner entstehen, die sich über die gesamte Wandstärke erstrecken. Solche sogenannten wanddurchgängigen Körner bzw. deren Korngrenzen können nachteilig hinsichtlich der Dichtigkeit der Glasschmelz-Komponente sein.

Bei einer Rekristallisation wachsen in dieser Ausführungsform Körner von beiden Seiten aufeinander zu, sodass durch eine außen und innen verdichtete Randzone die Entstehung von Korngrenzen, die sich über die gesamte Wandstärke der Glasschmeiz-Komponente erstrecken, vermieden werden kann.

Bevorzugt ist eine Verwendung der Glasschmelz-Komponente zur Aufnahme oder Behandlung von Glasschmelzen. Unter Behandlung wird beispielsweise ein Heizen, ein Rühren oder eine Formgebung verstanden. Unter Glasschmelzen werden hier Schmelzen oxidischer Werkstoffe verstanden.

### Herstellungsbeispiel

Eine gepresst-gesinterte Ronde aus Molybdän wurde an ihrer Oberseite und an der Unterseite in einem Glättwalzverfahren durch Beaufschlagung mit lokaler Druckspannung an einer oberflächlichen Randzone verdichtet. Das Werkzeug bestand jeweils aus einer keramischen Walzkugel als Wälzkörper, wobei zwei Kugeldimensionen (Durchmesser Ø 6 mm und Ø 13 mm) eingesetzt wurden. Die Walzkugel kann hydraulisch mit einem variablen Walzdruck beaufschlagt werden.

Wie in Tabelle 1 zusammengefasst, wurde die gepresst-gesinterte Ronde je Rondenseite mit einer Kugeldimension bearbeitet. Pro Rondenseite wurden 4 verschiedene Drücke (50, 150, 250, 350 bar) getestet. An jeder Seite der Ronde erfolgten Versuche an konzentrischen Abschnitten mit verschiedenen Walzdrücken.

**Tabelle 1: Versuchsmatrix**

| Walzdruck [bar] | p/s Mo Ronde, Seite 1 | p/s Mo Ronde, Seite 2 |
|---|---|---|
| | Walzkugel Ø 6 mm | Walzkugel Ø 13 mm |
| 50 | x | x |
| 150 | x | x |
| 250 | x | x |
| 350 | x | x |

Der Walzdruck wirkt als hydrostatischer Druck auf die Walzkugel und übersetzt sich über den Kugeldurchmesser sowie den Kugelabdruck an der Oberfläche in eine effektive Druckspannung (wirkende Kraft pro Fläche des Kugelabdrucks). Dem Fachmann ist es geläufig, die zur Abschätzung der effektiven Druckspannung erforderlichen Flächen von Kugelabdrücken aus mikroskopischen Aufnahmen zu bestimmen. In der nachfolgenden Tabelle sind Werte für die effektive Druckspannung (Flächenpressung) wiedergegeben, welche für das Beispiel einer Ø 6 mm Walzkugel ermittelt wurden.

**Tabelle 2: Walzdrücke und effektive Druckspannung für eine Ø 6 mm Walzkugel**

| Walzdruck [bar] | Effektive Druckspannung [MPa] |
|---|---|
| 50 | 738 |
| 150 | 892 |
| 250 | 1080 |
| 360 | 1059 |

Die Tabelle 2 illustriert, dass mit Walzdrücken ab etwa 250 bar bei 6 mm Kugeldurchmesser bereits eine effektive Druckspannung von mehr als 1000 MPa aufgebracht werden kann. Eine hier als Streckgrenze angesehene 0,2% Dehngrenze für gepresst-gesintertes Molybdän liegt maximal bei rund 400 MPa. Die ausgeübte Druckspannung liegt damit deutlich über der Streckgrenze des Werkstoffes.

Die effektive Druckspannung ist invers proportional zur Kontaktfläche der Kugel mit der Werkstückoberftäche. Mit steigendem Walzdruck nimmt die effektive Druckspannung ab ca. 250 bar nur noch geringfügig weiter zu.

In der folgenden Tabelle sind die Ergebnisse der Rauheitsmessung an den bearbeiteten Ronden zusammengefasst.

**Tabelle 3: Ergebnisse der Rauheitsmessung**

| | Ø 6 mm Walzkugel | Ø 13 mm Walzkugel |
|---|---|---|
| Walzdruck [bar] | Ra [µm] | Ra [µm] |
| 0 | 0,70 | 0,70 |
| 50 | 0,13 | 0,16 |
| 150 | 0,11 | 0,28 |
| 250 | 0,18 | 1,23 |
| 350 | 0,27 | 4,77 |

Es wurde ein MarsurfPS1 Rauheitsmessgerät der Firma Mahr mit einer Messstrecke von 5,6 mm verwendet. Alle Werte sind Einzelmessungen, der Messfehler liegt typischerweise im Bereich von 10 %. Der Ausgangszustand vor der Bearbeitung ist in der Zeile mit "0 bar" gezeigt und beträgt 0,70 µm.

Die beste Glättung der Oberfläche war mit der Bearbeitung der Ø 6 mm-Kugel gegeben (geringstes Ra von 0,11 µm), wobei sich ein Druck im Bereich von 100-200 bar als günstig erwiesen hat. Mit der Ø 13 mm Kugel wurden die kleinsten Rauheiten bei geringeren Drücken als mit der Ø 6 mm Kugel erreicht, lagen aber betragsmäßig über den mit der Ø 6 mm Kugel erzielbaren Rauheiten.

Ab etwa 200 bar wurde mit der Ø 13 mm Kugel die Rauheit gegenüber dem Ausgangszustand verschlechtert, 350 bar führen offenbar zu einer Schädigung der Oberfläche.

Zur Untersuchung des Rekristallisations-Verhaltens der gewalzten Oberfläche wurden für jeden Walzdruck der gepresst-gesinterten Mo-Ronde Proben entnommen. Die Proben wurden in Wasserstoff-Atmosphäre auf eine Maximaltemperatur zwischen 1700 und 2200 °C geheizt. Die Haltezeit betrug 2 h. Die Gefügeveränderungen wurden anhand von Querschnittsschliffen am Lichtmikroskop analysiert.

Hier für scheibenförmige Proben (Ronden) diskutiert, ist das Verfahren auf beliebige Geometrien von Glasschmelz-Komponenten anwendbar.

Die Erfindung wird im Folgenden durch die Figuren näher erläutert.

Dabei zeigt:
- Fig. 1a-b: Ausführungsbeispiele von erfindungsgemäßen Glasschmelz-Komponenten schematisch im Querschnitt
- Fig. 2a-b: metallographische Schliffe von in einer Randzone verdichteten Proben (ungeätzt zur Bestimmung der lokalen Porosität)
- Fig. 3a-d: metallographische Schliffe von in einer Randzone verdichteten und wärmebehandelten Proben (geätzt zur Bestimmung der Korngröße)
- Fig. 4a-b: eine schematische Darstellung des Verfahrens

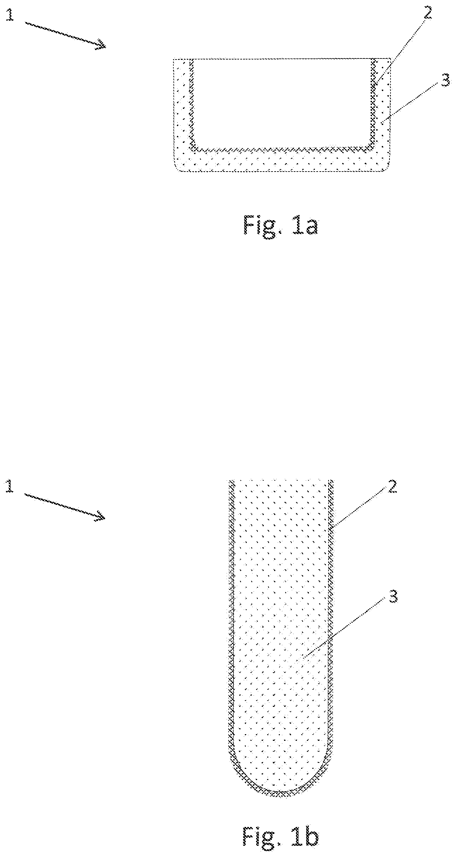

Figuren 1a und 1b zeigen Ausführungsbeispiele von erfindungsgemäßen Glasschmelz-Komponenten 1 schematisch im Querschnitt. In Figur 1a ist die Glasschmelz-Komponente 1 als Tiegel ausgebildet. Der Tiegel kann beispielsweise zur Saphir-Einkristall-Zucht vorgesehen sein. Der Tiegel wird dabei mit einem Chargiergut aus Aluminiumoxid beachickt, welches im Tiegel erschmolzen wird. Der Werkstoff des Tiegels ist typischerweise Wolfram oder Molybdän. An einer Innenwandung des Tiegels ist eine oberflächliche Randzone 2 erfindungsgemäß durch Beaufschlagung mit mechanischer Druckspannung verdichtet, wodurch die oberflächliche Randzone 2 eine geringere Porosität aufweist als darunterliegende Volumenabschnitte 3 der Glasschmelz-Komponente 1. Die Verdichtung der oberflächlichen Randzone 2 erfolgt bevorzugt über Glättwalzen. Beim Glättwalzen wird ein Wälzkörper angepresst und über die Oberfläche geführt. Für rotationsymmetrische Bauteile kann dies beispielsweise an einer Drehbank geschehen.

Die relative Dichte von gepresst-gesinterten Tiegein (entsprechend der darunterliegenden Volumenabschnitte 3) beträgt beispielsweise bei 96%. Dies entspricht einer Porosität von 4 %.

Die Porosität der oberflächlichen Randzone 2 liegt nach der Verdichtung beispielsweise bei 0,02 %. Durch die verdichtete oberflächliche Randzone 2 ist der Tiegel wesentlich beständiger gegenüber einem korrosiven Angriff durch die Aluminiumoxid-Schmelze als ein konventioneller Tiegel. Das nahezu porenfreie Gefüge der oberflächlichen Randzone 2 bietet einer Schmelze weniger Oberfläche für einen korrosiven Angriff als ein Gefüge mit Restporosität.

Bevorzugt wird der erfindungsgemäß oberflächlich verdichtete Tiegel einer Wärmebehandlung oberhalb der Rekristallisationstemperatur der verdichteten oberflächlichen Randzone 2 unterzogen. Darunterliegende Volumenabschnitte 3 des gepresst-gesinterten Tiegels weisen herstellungsbedingt keine plastische Umformung auf, weshalb in darunterliegenden Volumenabschnitten 3 keine oder nur geringe Rekristallisation auftritt. Die Rekristallisation in der oberflächlichen Randzone 2 hat ein starkes Komwachstum in der oberflächlichen Randzone 2 zur Folge. Die erforderliche Temperatur zur Einstellung des gewünschten Grobkorngefüges kann vom Fachmann durch Versuche bestimmt werden. Dabei können beispielsweise Wärmebehandlungen mit verschiedenen Temperaturen durchgeführt werden. Anhand metallographischer Auswertung der Proben kann jene Temperatur bestimmt werden, bei weicher sich ein günstiges Grobkorngefüge einstellt.

Das resultierende Gefüge in der oberflächlichen Randzone 2 weist wesentlich gröbere Körner auf als das Gefüge in darunterliegenden Volumenabschnitten 3. Das Grobkorngefüge der oberflächlichen Randzone 2 bewirkt eine weiter erhöhte Beständigkeit der Glasschmelz-Komponente 1 gegenüber einem korrosiven Angriff durch eine Schmelze. Da Korngrenzen stets Schwachstellen für einen korrosiven Angriff darstellen, ist ein Grobkorngefüge korrosionsbeständiger als ein Gefüge mit feinem Korn.

Bevorzugt findet die Wärmebehandlung in situ bei einem Einsatz des Tiegels statt. Die typischen Einsatztemperaturen für Tiegel für die Saphir-Einkristallzucht liegen bei ≥ 2000°C, Somit bildet sich im ersten Einsatz des Tiegels das angestrebte Grobkorngefüge aus, ohne dass eine separate Wärmebehandlung durchgeführt werden muss.

In Figur 1b ist die ist die Glasschmelz-Komponente 1 als Glasschmelzelektrode ausgeführt. Glasschmelzelektroden dienen zur Erwärmung von Glasschmelzen durch direkten Stromdurchgang durch die Glasschmelze. Glasschmelzelektroden werden typischerweise aus geschmiedeten und / oder gewalzten Molybdän-Stäben gefertigt. Wegen der geringen Umformgrade von Stab-Material weisen Glasschmelzerektroden beispielsweise eine Restporosität von 3% entsprechend einer relativen Dichte von Dichte 97% auf.

Die Glasschmelzelektrode gemäß dem vorliegenden Ausführungsbeispiel weist eine verdichtete oberflächliche Randzone 2 mit einer Porosität von beispielsweise 0,02 % auf, während in darunterliegenden Volumenabschnitten 3 der Glasschmelzelektrode die Porosität 3 % beträgt.

Wie für das Ausführungsbeispiel des Tiegels erläutert, wird auch hier bevorzugt eine Wärmebehandlung zur Rekristallisation der Randzone 2 durchgeführt.

Die Glasschmelzelektrode gemäß dem Ausführungsbeispiel ist wesentlich beständiger gegenüber einem korrosiven Angriff durch Glasschmelzen als eine konventionelle Glasschmelzelektrode.

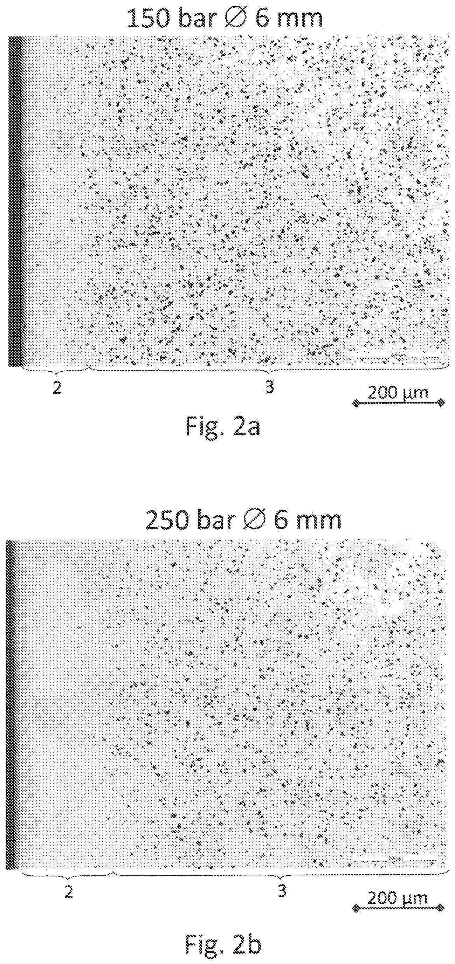

Figuren 2a-b zeigen lichtmikroskopische Aufnahmen ungeätzter metallographischer Querschliffe durch die oberflächliche Randzone 2 und darunterliegende Volumenabschnitte 3 von gepresst-gesinterten Molybdän-Ronden, bei welchen eine oberflächliche Randzone 2 durch Glättwalzen mit einer Ø 6 mm Kugel mit 150 bar bzw. 250 bar Walzdruck verdichtet wurde.

Die oberflächliche Randzone 2 liegt jeweils am linken Bildrand. Man erkennt schon anhand der Bilder, dass die Porosität in der oberflächlichen Randzone 2 gegenüber darunterliegenden Volumenabschnitten 3 deutlich reduziert ist. Die nachfolgende Tabelle zeigt die Ergebnisse der Porositätsbestimmung an den Proben der Figuren 2a-b.

**Tabelle 4: Ergebnisse der Porositätsbestimmung an den Proben von Figuren 2a-b**

| **Walzdruck** | **Figur** | **Position** | **Porosität [%]** |
|---|---|---|---|
| **150 bar** | **Figur 2a** | Randzone | 0,4 |
| | | 500 µm vom Rand | 4,6 |
| **250 bar** | **Figur 2b** | Randzone | 0,2 |
| | | 500 µm vom Rand | 5,1 |

Die quantitative Auswertung ergab eine Porosität der Randzone 2 von etwa 0,4 % für einen Walzdruck von 150 bar und rund 0,2 % für 250 bar Walzdruck. Die Porosität in darunterliegenden Volumenabschnitten 3 hingegen beträgt rund 4-5 %.

Zusammenfassend geht aus Figuren 2a-b und der quantitativen Gefügeanalyse hervor, dass eine Beaufschlagung der oberflächlichen Randzone 2 einer gepresst-gesinterten Probe mit Druckspannung - in diesem Beispiel durch Glättwalzen - zu einer nahezu vollständigen Beseitigung von Poren führt. Die Tiefe der verdichteten oberflächlichen Randzone 2 liegt bei den Proben mit 150 bar Walzdruck bei etwa 200 µm, bei den Proben mit 250 bar Walzdruck bei rund 300 µm.

Die Bestimmung der Porosität erfolgte mittels quantitativer Gefügeanalyse Ober einen Flächenanteil von Poren. Dazu wird aus der lichtmikroskopischen Aufnahme ein Schwarz-Weiß-Bild erstellt und in einem Bildbearbeitungsprogramm der Flächenanteil der Poren an repräsentativen Bildausschnitten ermittelt

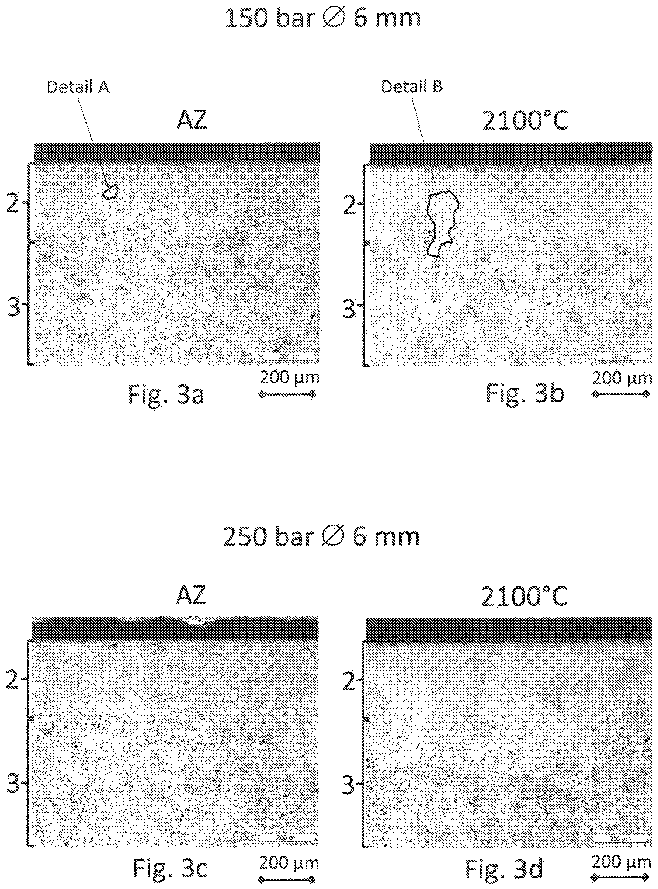

Figuren 3a-d zeigen lichtmikroskopische Aufnahmen von Querschliffen durch die verdichtete Randzone 2 und Teile von darunterliegenden Volumenabschnitten 3 von an der oberflächlichen Randzone 2 verdichteten Proben aus gepresst-gesintertem Molybdän. Die Schliffe wurden geätzt, um die Korngrenzen sichtbar zu machen.

Die Parameter bei der Verdichtung der Randzone 2 betrugen 150 bar (Figuren 3a und 3b) bzw. 250 bar (Figuren 3c und 3d) Walzdruck mit einer Ø 6 mm Walzkugel als Wälzkörper.

Figuren 3a und 3c zeigen den Ausgangszustand ("AZ") nach Verdichtung der oberflächlichen Randzone 2 durch Beaufschlagung mit mechanischer Druckspannung vor einer Wärmebehandlung. Im Ausgangszustand vor einer Wärmebehandlung liegt sowohl in der oberflächlichen Randzone 2 als auch in darunterliegenden Volumenabschnitten 3 ein feinkörniges Sintergefüge vor.

Figuren 3b und 3d zeigen das Gefüge nach erfolgter Rekristallisation durch eine Wärmebehandlung bei 2100°C und einer Haltezeit von zwei Stunden. Deutlich zu erkennen ist die Vergröberung der Kornstruktur in der oberflächlichen Randzone 2. In unverformten darunterliegenden Volumenabschnitten 3 verbleibt ein feinkörniges Gefüge.

Zur besseren Ablesbarkeit sind einzelne Körner hervorgehoben, Detail A in Figur 3a zeigt beispielhaft ein Korn in der oberflächlichen Randzone 2 im Ausgangszustand. Die Korngröße beträgt rund 40 µm. Detail B in Figur 3b zeigt ein Korn in der oberflächlichen Randzone 2 einer bei 2100°C wärmebehandelten Probe. Die Korngröße beträgt rund 250 µm. Die Korngrößen in unverformten darunterliegenden Volumenabschnitten 3 blieben unverändert. Daran ist ersichtlich, dass die das Kornwachstum verursachende Rekristallisation nur in der oberflächlichen Randzone 2 stattfindet, in welche durch die mechanische Verdichtung Triebkraft für die Rekristallisation in Form mechanischer Umformarbeit eingebracht wurde.

Die Ergebnisse einer quantitativen Gefügeanalyse hinsichtlich der Korngrößen sind in nachfolgender Tabelle zusammengefasst.

**Tabelle 5: Ergebnisse der quantitativen Gefügeanalyse der Proben von Figur 3**

| **Walzdruck** | **Zustand** | **Position** | **KG [µm]** | **KG ASTM** | **KZ [1/mm²]** |
|---|---|---|---|---|---|
| 150 bar | AZ (Figur 3a) | Randzone | 33 | 6,5 | 900 |
| | | 500 µm vom Rand | 30 | 6,8 | 1056 |
| | 2100°C/ 2h (Figur 3b) | Randzone | 64 | 4,6 | 240 |
| | | 500 µm vom Rand | 38 | 6,1 | 676 |
| 250 bar | AZ (Figur 3c) | Randzone | 35 | 6,3 | 784 |
| | | 500 µm vom Rand | 35 | 6,4 | 812 |
| | 2100°C/2h (Figur 3d) | Randzone | 64 | 4,6 | 240 |
| | | 500 µm vom Rand | 41 | 5,9 | 576 |

Tabelle 5 gibt die Ergebnisse der quantitativen Gefügeanalyse der in Figur 3a-d gezeigten Proben wieder. Die Abkürzungen bedeuten: AZ - Ausgangszustand nach Glättwalzen, KG - mittlere Korngröße, KZ - Kornzahl. Die mittlere Korngröße in µm, die Korngröße nach ASTM ("ASTM-Zahl") sowie die Kornzahl wurden nach ASTM E112-13 ermittelt Die Auswertung erfolgte Ober das Linienschnittverfahren an lichtmikroskopischen Aufnahmen von geätzten Schliffen. Die Messgenauigkeit bei der Bestimmung der Korngröße in µm beträgt etwa 5%.

Man erkennt, dass die Korngröße in der Randzone 2 nach der Wärmebehandlung gegenüber dem unverformten Gefüge in darunterliegenden Volumenabschnitten 3 nahezu verdoppelt ist

Die Wärmebehandlung oberhalb der Rekristallisationatemperatur der umgeformten oberflächlichen Randzone 2 führt also zu einem deutlichen Komwachstum. Da die Anzahl der Korngrenzen in einem grobkörnigen Gefüge reduziert ist, und die Diffusion von Verunreinigungen im Hochtemperaturbereich überwiegend entlang der Korngrenzen stattfindet, bewirkt eine grobkörnige Randzone 2 eine reduzierte Korngrenzen-Diffusion. Ein korrosiver Angriff durch Eindiffundieren von Schmelze entlang von Korngrenzen wird erschwert. Darüber hinaus verbessert das grobkörnige Gefüge der Randzone 2 die Kriechbeständigkeit einer solcherart hergestellten Glasschmelz-Komponente 1 .

Schließlich reduziert die resultierende sehr glatte Oberfläche der Randzone 2 eine mögliche Blasenbildung durch Oxide in einer Schmelze. Eine glatte Oberfläche bietet weniger Keime zur Entwicklung von Gasblasen.

Dies führt zu wesentlich verbesserten Eigenschaften von derart hergestellten Glasschmelz-Komponenten 1.

Die Verdichtung der Randzone 2 mittels Beaufschlagung mit lokaler Druckspannung ist kostengünstig und kann grundsätzlich für sämtliche Refraktärmetall-Werkstoffe angewendet werden.

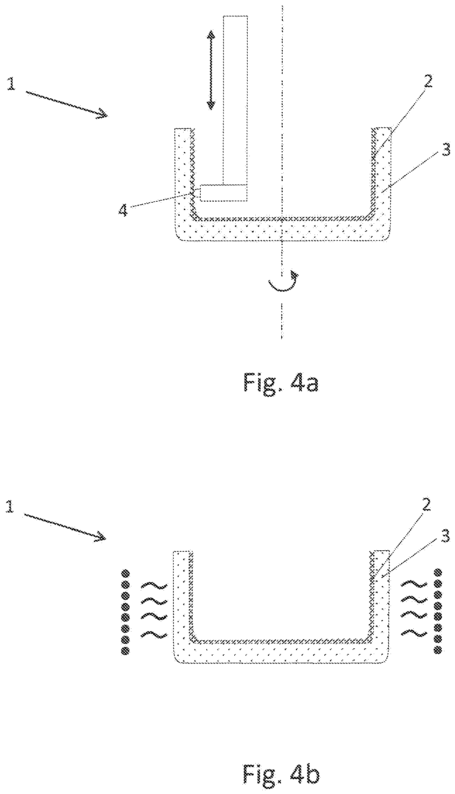

Figur 4a zeigt eine schematische Darstellung des erfindungsgemäßen Verfahrens. Im gezeigten Beispiel handelt es sich bei der Glasschmelz-Komponente 1 um einen Tiegel. Eine oberflächliche Randzone 2 der in darunterliegenden Volumenabschnitten 3 eine Restporosität aufweisenden Glasschmetz-Komponente 1 wird durch Beaufschlagung mit lokaler Druckspannung mittels eines Wälzkörpers 4 verdichtet und die oberflächliche Randzone 2 nahezu porenfrei. Das Verfahren wird hier durch Andrücken eines kugelförmigen Wälzkörpers 4 realisiert.

Bevorzugt wird die Glasschmelz-Komponente 1 danach einer Wärmebehandlung oberhalb der Rekristallisationstemperatur des die Glasschmelz-Komponente 1 bildenden Refraktärmetalls unterzogen, wie in Figur 4b schematisch dargestellt. Diese Wärmebehandlung führt zu einer Grobkornbildung in der zuvor verformten Randzone 2.

Man wählt also den scheinbar paradoxen Weg, die zuvor an einer oberflächlichen Randzone 2 plastisch verformte Glasschmelz-Komponente 1 einer Wärmebehandlung bei einer Temperatur oberhalb der Rekristallisationstemperatur des Refraktärmetalls zu unterziehen. Eine Wärmebehandlung oberhalb der Rekristallisationstemperatur führt in jedem Fall dazu, dass etwaige vorhandene Härtesteigerungen durch Kaltverfestigung sowie etwaige vorhandene Druckeigenspannungen abgebaut werden. Im Stand der Technik wird jedoch mit einer Beaufschlagung mit lokaler Druckspannung genau dies, nämlich eine Härtesteigerung und Induzierung von Druckeigenspannungen beabsichtigt. Deswegen wird eine Wärmebehandlung oberhalb der Rekristallisationstemperatur an zuvor zum Zwecke einer Härtesteigerung und / oder Einbringung von Druckeigenspannungen behandelten Komponenten im Stand der Technik nicht durchgeführt.

Wie bereits erläutert, führt jedoch das aus dieser Wärmebehandlung resultierende Grobkorngefüge zu einer verbesserten Beständigkeit der Glasschmelz-Komponente 1 gegenüber einem korrosiven Angriff durch Glasschmelzen.

## Patentansprüche

1. Verfahren zur Herstellung einer Glasschmelz-Komponente (1) aus Refraktärmetall, **dadurch gekennzeichnet, dass** eine oberflächliche Randzone (2) der Glasschmelz-Komponente (1) zumindest abschnittsweise durch Beaufschlagung mit lokaler Druckspannung verdichtet und dabei gegenüber einem unterhalb der oberflächlichen Randzone (2) liegenden Volumenabschnitt (3), der eine Restporosität aufweist, in der Porosität reduziert wird, wobei nach der Verdichtung der Randzone (2) die Glasschmelz-Komponente (1) oder wenigstens die oberflächliche Randzone (2) der Glasschmelz-Komponente (1) einer Wärmebehandlung bei einer Temperatur oberhalb einer Rekristallisationstemperatur des Refraktärmetalls unterzogen wird, derart, dass in der oberflächlichen Randzone (2) Kornwachstum erzeugt wird.

2. Verfahren nach Anspruch 1, wobei die Beaufschlagung mit lokaler Druckspannung durch einen Wälzkörper (4) in einem Glättwalzprozess erfolgt.

3. Verfahren nach Anspruch 1, wobei die Beaufschlagung mit lokaler Druckspannung durch Kugelstrahlen erfolgt.

4. Verfahren nach wenigstens einem der vorangegangenen Ansprüche, wobei durch die Beaufschlagung mit lokaler Druckspannung die Porosität der verdichteten oberflächlichen Randzone (2) auf kleiner 1% reduziert wird.

5. Verfahren nach wenigstens einem der vorangegangenen Ansprüche, wobei die aufgebrachte lokale Druckspannung über einer Streckgrenze des Refraktärmetalls liegt.

6. Glasschmelz-Komponente (1) aus Refraktärmetall, welche durch ein pulvermetallurgisches Verfahren hergestellt ist und zumindest abschnittsweise eine oberflächliche Randzone (2) aufweist, die gegenüber einem unterhalb der oberflächlichen Randzone (2) liegenden Volumenabschnitt (3), der eine Restporosität aufweist, verdichtet ist und eine verringerte Porosität aufweist, wobei die oberflächliche Randzone (2) eine gröbere Kornstruktur aufweist als übrige Volumenabschnitte (3) der Glasschmelz-Komponente (1) und eine mittlere Korngröße der oberflächlichen Randzone (2) in einem Bereich von 40 bis 1000 µm liegt.

7. Glasschmelz-Komponente (1) nach Anspruch 6, wobei die Porosität der oberflächlichen Randzone (2) maximal 1% beträgt.

8. Glasschmelz-Komponente (1) nach wenigstens einem der Ansprüche 6 bis 7, wobei die Porosität der oberflächlichen Randzone (2) um wenigstens 1,5 % - Punkte geringer als die Porosität eines darunterliegenden Volumenabschnitts (3) ist.

9. Glasschmelz-Komponente (1) nach wenigstens einem der Ansprüche 6 bis 8, wobei die Randzone (2) eine Tiefe zwischen 50 µm und 1000 µm aufweist.

10. Glasschmelz-Komponente (1) nach wenigstens einem der Ansprüche 6 bis 9, wobei die Randzone (2) an ihrer Oberfläche eine Rauheit Ra kleiner 0,30 µm aufweist.

11. Verwendung einer Glasschmelz-Komponente (1) nach wenigstens einem der Ansprüche 6 bis 10 als Tiegel.

12. Verwendung einer Glasschmelz-Komponente (1) nach wenigstens einem der Ansprüche 6 bis 10 als Glasschmelzelektrode.

13. Glasschmelz-Komponente (1) nach wenigstens einem der vorangegangenen Ansprüche 6-10, wobei die Glasschmelz-Komponente (1) sowohl an einer Innenwandung als auch an einer Außenwandung eine verdichtete oberflächliche Randzone (2) aufweist.

14. Verwendung einer Glasschmelz-Komponente (1) nach wenigstens einem der vorangegangenen Ansprüche 6-10 zur Aufnahme oder Behandlung von Glasschmelzen.

## Claims

1. A process for producing a glass melting component (1) composed of refractory metal, **characterized in that** a surface zone (2) of the glass melting component (1) is densified at least in sections by application of local compressive stress and as a result has its porosity reduced compared to a volume section (3) which is located underneath the surface zone (2) and has residual porosity, wherein after densification of the surface zone (2) the glass melting component (1) or at least the surface zone (2) of the glass melting component (1) is subjected to a heat treatment at a temperature above a recrystallization temperature of the refractory metal such that grain growth is induced in the surface zone (2).

2. The process as claimed in claim 1, wherein the application of local compressive stress is effected by means of a rolling body (4) in a smooth rolling process.

3. The process as claimed in claim 1, wherein the application of local compressive stress is effected by shot blasting.

4. The process as claimed in at least one of the preceding claims, wherein the porosity of the densified surface zone (2) is reduced to less than 1% by the application of local compressive stress.

5. The process as claimed in at least one of the preceding claims, wherein the local compressive stress applied is above a yield point of the refractory metal.

6. A glass melting component (1) composed of refractory metal, produced by a powder-metallurgical process, which has, at least in sections, a surface zone (2) which, compared to a volume section (3) which is located underneath the surface zone (2) and has residual porosity, has been densified and has reduced porosity, wherein the surface zone (2) has a coarser grain structure than other volume sections (3) of the glass melting component (1) and an average grain size of the surface zone (2) is in the range from 40 to 1000 µm.

7. The glass melting component (1) as claimed in claim 6, wherein the porosity of the surface zone (2) is not more than 1%.

8. The glass melting component (1) as claimed in at least one of claims 6 to 7, wherein the porosity of the surface zone (2) is at least 1.5 percentage points lower than the porosity of an underlying volume section (3).

9. The glass melting component (1) as claimed in at least one of claims 6 to 8, wherein the surface zone (2) has a depth in the range from 50 µm to 1000 µm.

10. The glass melting component (1) as claimed in at least one of claims 6 to 9, wherein the surface of the surface zone (2) has a roughness Ra of less than 0.30 µm.

11. Use of a glass melting component (1) as claimed in at least one of claims 6 to 10 as a crucible.

12. Use of a glass melting component (1) as claimed in at least one of claims 6 to 10 as a glass melting electrode.

13. The glass melting component (1) as claimed in at least one of the claims 6 to 10, wherein the glass melting component (1) has a densified surface zone (2) both on an interior wall and also on an outer wall.

14. The use of a glass melting component (1) as claimed in at least one of the preceding claims 6 to 10 for the accommodation or treatment of glass melts.

## Revendications

1. Procédé pour la fabrication d'un élément de fusion de verre (1) en métal réfractaire, **caractérisé en ce qu'**une zone de bord superficielle (2) de l'élément de fusion de verre (1) est compactée au moins par sections par sollicitation par une contrainte de compression locale et est ainsi réduite en porosité par rapport à une section volumique (3), qui présente une porosité résiduelle, située sous la zone de bord superficielle (2), l'élément de fusion de verre (1) ou au moins la zone de bord superficielle (2) de l'élément de fusion de verre (1) étant soumis(e), après le compactage de la zone de bord (2), à un traitement thermique à une température supérieure à la température de recristallisation du métal réfractaire de manière telle qu'une croissance de grain est générée dans la zone de bord superficielle (2).

2. Procédé selon la revendication 1, la sollicitation par une contrainte de compression locale ayant lieu par un cylindre lisse (4) dans un procédé de galetage.

3. Procédé selon la revendication 1, la sollicitation par une contrainte de compression locale ayant lieu par grenaillage.

4. Procédé selon au moins l'une quelconque des revendications précédentes, la porosité de la zone de bord superficielle (2) compactée étant réduite à moins de 1% par la sollicitation par une contrainte de compression locale.

5. Procédé selon au moins l'une quelconque des revendications précédentes, la contrainte de compression locale appliquée se situant au-dessus d'une limite d'élasticité du métal réfractaire.

6. Élément de fusion du verre (1) en métal réfractaire, qui est fabriqué par un procédé de métallurgie des poudres et qui présente au moins par sections une zone de bord superficielle (2) qui est compactée par rapport à une section volumique (3), présentant une porosité résiduelle, située sous la zone de bord superficielle (2) et qui présente une porosité réduite, la zone de bord superficielle (2) présentant une structure de grain plus grossière que d'autres sections volumiques (3) de l'élément de fusion de verre (1) et une grosseur moyenne de grain de la zone de bord superficielle (2) se situant dans une plage de 40 à 1000 µm.

7. Élément de fusion de verre(1) selon la revendication 6, la porosité de la zone de bord superficielle (2) étant d'au maximum 1%.

8. Élément de fusion de verre (1) selon au moins l'une quelconque des revendications 6 à 7, la porosité de la zone de bord superficielle (2) étant inférieure d'au moins 1,5 point en % à la porosité d'une section volumique (3) sous-jacente.

9. Élément de fusion de verre (1) selon au moins l'une quelconque des revendications 6 à 8, la zone de bord (2) présentant une profondeur de entre 50 µm et 1000 µm.

10. Élément de fusion de verre (1) selon au moins l'une quelconque des revendications 6 à 9, la zone de bord (2) présentant, au niveau de sa surface, une rugosité Ra inférieure à 0,30 µm.

11. Utilisation d'un élément de fusion de verre (1) selon au moins l'une quelconque des revendications 6 à 10 comme creuset.

12. Utilisation d'un élément de fusion de verre (1) selon au moins l'une quelconque des revendications 6 à 10 comme électrode de fusion de verre.

13. Élément de fusion de verre (1) selon au moins l'une quelconque des revendications précédentes 6 à 10, l'élément de fusion de verre (1) présentant une zone de bord superficielle (2) compactée tant au niveau d'une paroi interne qu'au niveau d'une paroi externe.

14. Utilisation d'un élément de fusion de verre (1) selon au moins l'une quelconque des revendications précédentes 6 à 10 pour recevoir ou traiter des masses fondues de verre.
